Europäisches Patentamt

European Patent Office

Office européen des brevets

(11) Publication number: **0 097 793**

**A2**

(12) **EUROPEAN PATENT APPLICATION**

(21) Application number: **83104398.9**

(22) Date of filing: **04.05.83**

(51) Int. Cl.³: **G 11 B 23/02**

(30) Priority: **29.06.82 JP 112301/82**

(43) Date of publication of application:
**11.01.84 Bulletin 84/2**

(84) Designated Contracting States:
**DE FR GB IT**

(71) Applicant: **Shin-Etsu Polymer Co., Ltd.**
**11, Nihonbashi-Honcho 4-chome, Chuo-ku**
**Tokyo(JP)**

(72) Inventor: **Shiiba, Atsushi**
**2-15, Azuma-cho**
**Omiya-shi Saitama-ken(JP)**

(74) Representative: **Jaeger, Klaus, Dr. et al,**
**JAEGER & PARTNER Patentanwälte Bergstrasse 48 1/2**
**D-8035 München-Gauting(DE)**

(54) Jacket for magnetic disk memory.

(57) The invention provides an improvement in the structure of a jacket for a floppy disk-type magnetic disk memory. Different from conventional ones of bag-like form fabricated by two-fold folding of a plastic sheet followed by further folding of the peripheries and integral welding of the two leaves on the plane of the jacket, the inventive jacket comprises two separately shaped square covering sheet members each having the peripheries bent at right angle to form riser walls and engaged each with the other at the riser walls into a thin box-like form with the aid of inwardly raised projections at the corners of the covering sheet member serving as a spacer means so that the dimensional inaccuracy unavoidable in the folding work can be obviated. Further, the liners, which conventionally are integrally bonded by welding to the inside surface of the respective covering sheet, are provided separately from the covering sheet members so that the covering sheet members are free from thermal stress or distortion. A further improvement is obtained by providing the liner sheet with a peroipheral protrusion by which the liner sheet is manually or mechanically rotatable to provide a shutter means to the oblong side opening for recording and readout with a magnetic head.

JACKET FOR MAGNETIC DISK MEMORY

BACKGROUND OF THE INVENTION

The present invention relates to a novel and improved structure of a jacket for magnetic disk memory.

In recent years, there are widely used magnetic disk memories called floppy disk or flexible disk as a magneitc recording medium in small-sized or compact type computers. The magnetic disk memory of this type is usually used as enveloped in a bag-like jacket made of a thermoplastic resin sheet having a circular opening at the center for inserting the driving shaft for rotating the disk, an oblong side opening around the center opening for recording and readout with a magnetic head and a small circular side opening called index window. Such a bag-like jacket is usually provided with a liner on each side made of a non-woven fabric by which the magnetic disk is supported in a freely rotatable manner in contact therewith.

The conventional procedure for the fabrication of the jacket of the above described type is as follows. Thus, a plastic sheet is cut into desired form and size along the predetermined profile and then a non-woven fabric sheet of thermoplastic synthetic fibers is integrated therewith by welding in spots. The plastic sheet thus provided with the liner of the non-woven fabric sheet is folded two-fold into a bag-like form with the liner sheet facing inside followed by spot welding of the folded peripheral margins at the lateral sides into a bag which is then provided by punching with the center opening and the other openings. The magnetic disk is put into this bag-like jacket and the fourth periphery of the bag is folded and sealed by spot welding to give a finished magnetic disk memory enveloped in the jacket.

The above described conventional jacket for magnetic disk memory has several problems and drawbacks. For example, the dimension of the gap space between two lined surfaces, in which the magnetic disk is held and rotated, cannot be controlled very accurately due to even a very slight change in the angle formed in the folding work of the plastic sheet so that the torque for the rotation of the disk differs from jacket to jacket considerably. Further, the jacket fabricated in the above described manner is under stress because the folding work of the plastic sheet is performed with localized heating so that the strain in the sheet is exhibited as warping or bulging of the surfaces of the jacket especially when the jacket is subjected to the test for thermal stability under heating. Moreover, the materials and thickness of the plastic sheet suitable for the folding works are rather limited and the costs for the fabrication of such a bag-like jacket of magnetic disk memory are relatively high as a result of the complicated process of fabrication.

## SUMMARY OF THE INVENTION

It is therefore an object of the present invention to provide a jacket for magnetic disk memory free from the above described problems and disadvantages of the prior art jackets.

The jacket for magnetic disk memory of the invention comprises two separately shaped rectangular or, typically, square covering sheet members made of a thermoplastic synthetic resin each having a circular center opening, an oblong side opening and an index window, the peripheral portion along the four sides of each of the covering sheet members being bent at about right angle in the form of riser walls so as to be engageable with the riser walls of the peripheral portion of the other covering sheet member to form a thin box-like form, at least one of the covering sheet members being provided at each of the corner portions with an inwardly raised projection with a flat top surface to define the space for the rotation of the magnetic disk and to serve as a spacer when the two sheet members are combined integrally to give a box-like form and the two covering sheet members being bonded together at the corner projections with a magnetic disk enveloped therebetween, and two liner sheets held between the two covering sheet members.

Further improvement can be obtained when each of the above mentioned liner sheets is not integrally bonded to the respective sheet member of the jacket but held in the box-like jacket freed from the covering sheet member because the covering sheet member is not subjected to heating for the welding of the liner sheet thereto so that the finished jacket is free from any thermal stress or strain.

## BRIEF DESCRIPTION OF THE DRAWING

FIGURES 1 to 3 are each a flat view, a side view and an enlarged cross sectional view at the peripheral portion of a conventional bag-like jacket for magnetic disk memory.

FIGURE 4 is a flat view of a jacket for magnetic disk memory of the invention and FIGURE 5 is a cross sectional view of the same along the line V-V in FIGURE 4 with the covering sheet members being apart with a magnetic disk therebetween.

FIGURES 6 to 8 are each an enlarged cross sectional view of the inventive jacket at the peripheral portion.

FIGURES 9 and 10 are each a plan view of the liner sheet of the invention provided with a electrostatically flocked area mounted on a covering sheet member.

FIGURES 11 to 13 are each a different form of the liner sheet of the invention and FIGURES 14 and 15 are each a cross sectional view of the liner sheet.

FIGURE 16 is a plan view of a liner sheet provided with a finger-like projection for manual revolution and FIGURE 17 is a flat view a of the inventive jacket provided with such a liner sheet for shutter means. FIGURE 18 is a plan view of another jacketed magnetic disk memory with the inventive jacket provided with a shutter means.

FIGURES 19a and 19b illustrate the revolution of the liner sheet to provide a shutter means for the oblong side opening by pushing at the finger-like protrusion.

## DETAILED DESCRIPTION OF THE PREFERRED EMBODIMENTS

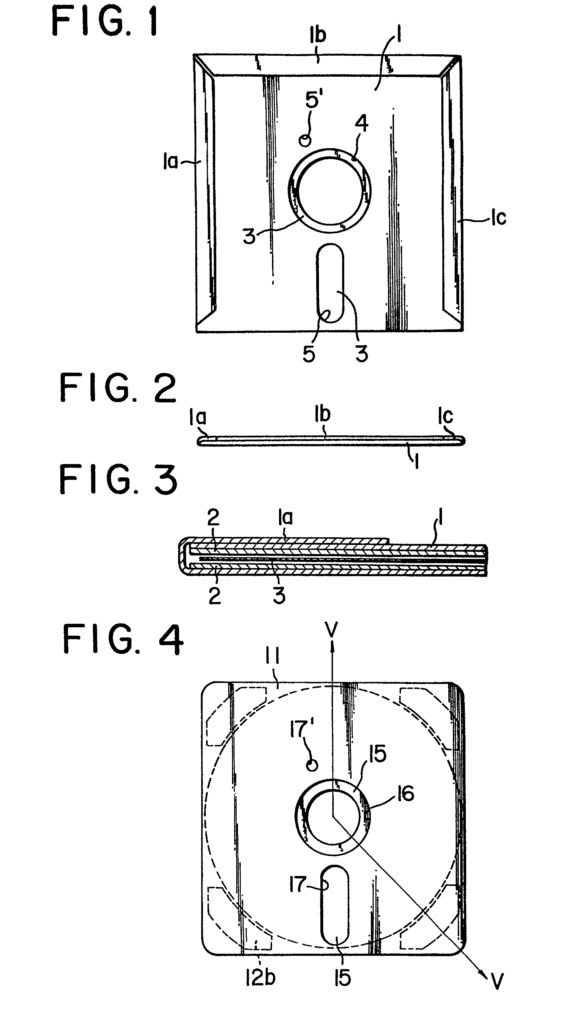

In the first place, conventional jackets for magnetic disk memory are described with reference to FIGURES 1 to 3 illustrating a typical one. As is shown in FIGURE 1, a sheet member made of a thermoplastic synthetic resin 1 is folded two-fold and bonding of the upper and lower leaves along the folded side peripheral margins 1a and 1c by welding or by use of an adhesive gives a bag-like jacket which is then punched to form the circular center opening 4 for inserting the shaft for rotating the magnetic disk 3 as well as an oblong side opening 5 for recording and readout with a magnetic head and an index window 5'. The sheet member 1 is provided on the inside surface thereof with a liner sheet 2 made of a non-woven fabric of thermoplastic synthetic fibers as bonded to the sheet member 1 by spot-wise welding. After inserting a magnetic disk 3 into the thus formed bag-like jacket, the periphery of the last side 1b is folded and bonded so that the magnetic disk 3 is enveloped in the jacket thus completed.

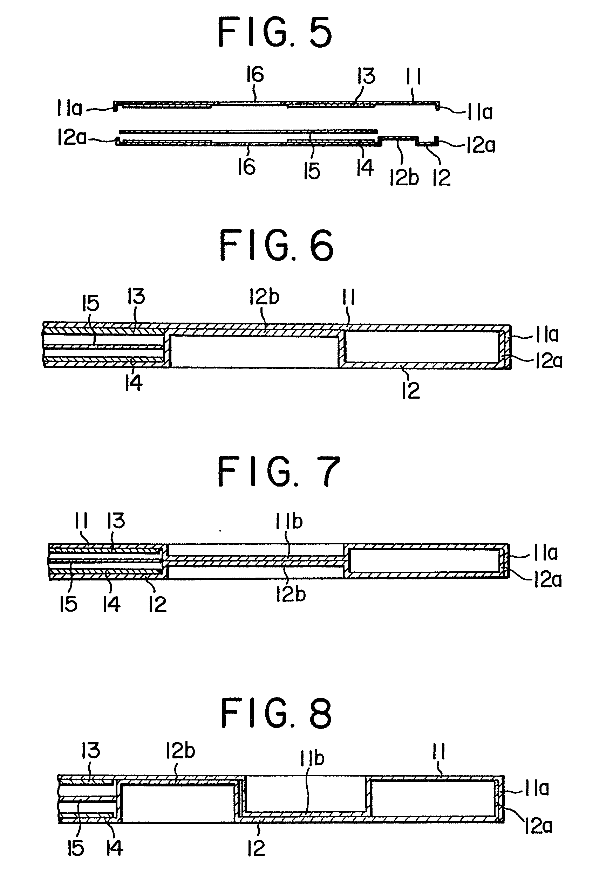

In the next place, FIGURE 4 and following give illustration of the inventive jacket for magnetic disk memory. FIGURE 4 is a plan view of a typical one of the inventive jacket and FIGURE 5 is a cross sectional view of the same with the two covering sheet members 11 and 12 separated apart. As is seen from these figures, the inventive jacket is basically composed of two separately shaped rectangular or, typically, square covering sheet members 11 and 12 of a plastic resin and the periphery of each of them are bent at about right angle along the four sides in the form of riser walls 11a or 12a to be engageable with the riser walls of the other covering sheet member when these two covering sheet members 11 and 12 are put together to form a thin box-like form. It should be notd that the outer form of these covering sheet members is not limited to rectangular or square one but some modifications, e.g. cutting off of the corner portions, may be possible according to need. Meanwhile, each of the covering sheet members 11 and 12 is provided with a circular center opening 16, an oblong side opening 17 and an index window 17'. As is shown in FIGURE 5 showing a cross section of the jacket along the line V-V in FIGURE 4, each of the covering sheet members 11 and 12 is provided on the inside surface with a liner sheet 13 or 14.

With a magnetic disk 15 placed in between, these two covering sheet members 11 and 12 are put together to be engaged at the riser walls 11a and 12a and they are bonded together by welding or by use of an adhesive to form a thin box-like jacket as is mentioned above.

Another characteristic feature in this inventive jacket is that either one or both of the covering sheet members 11 and 12 are provided with inwardly raised flat-top projections at the corner portions. In the embodiment illustrated in FIGURES 4 and 5, only one of the covering sheet members 12 is provided with such projections 12b. The projections 12b serve, on one hand, as a spacer means to define the thickness of the gap space between the two covering sheet members 11 and 12 when they are integrally put together to form a box-like jacket. On the other hand, the peripheries or side walls of the projections 12b facing the center of the jacket serve to delimit the area occupied by the rotating magnetic disk 15 to hold it in the exact position. This situation is well illustrated in FIFURE 6 which is an enlarged cross section of the finished jacket shown in FIGURES 4 and 5 at the marginal portion according to which it is understood that the thickness of the space between the covering sheet members 11 and 12 is defined by the engagement of the riser walls 11a and 12a as well as by the projection 12b serving as a spacer means and the outer periphery of the magnetic disk 15 is contacting or nearly contacting with the side wall of the projection 12b. Meanwhile, the covering sheet members 11 and 12 are bonded together preferably at the flat tops of the projections 12b by welding or by use of an adhesive.

FIGURE 7 is a cross sectional view similar to FIGURE 6 but, in this case, each of the covering sheet members 11 and 12 is provided with the corner projections 11b and 12b, respectively, so that these two covering sheet members 11 and 12 have approximately symmetrical configuration with each other. Meanwhile, such a covering sheet members 11, 12 can be shaped by a conventional shaping method such as injection molding as well as secondary shaping, e.g. vacuum forming or pressure forming, of a synthetic thermoplastic resin sheet prepared by a conventional process of calendering, T-die method and the like easily and with very accurate dimensions.

FIGURE 8 is a cross sectional view of another embodiment of the inventive jacket, in which each of the covering sheet members 11 and 12 is provided with the corner projections 11b or 12b at positions not to overlap the corner projections of the other covering sheet member. This model is advantageous due to the convenience in handling a large number of such jackets stacked high and decreased danger of sticking between the surfaces of the jackets stacked one on the other.

The above described construction of the inventive jacket has advantages in several respects over the conventional bag-like jackets. Firstly, the covering sheet member is provided with the peripheral riser walls and the corner projections so that the rigidity of the sheet member is greatly improved with increased mechanical strengths so that handling thereof is facilitated. The double-walled structure of the side walls of the box-like jacket also contributes to the improvement of the mechanical strength as obtained by the engagement of the riser walls 11a and 12a. Further, the covering sheet members are shaped by injection molding, vacuum forming, pressure forming and the like method so that the dimensional accuracy thereof is much higher than in the conventional bag-like jacket fabricated by two-fold folding of a plastic sheet. In particular, the space in which the magnetic disk is held has very accurate dimensions not only in respect of the thickness but also within the plane of the disk rotation by virtue of the corner projections which serve in two ways as a spacer means and as a delimitation of the area of disk rotation so that fluctuation or unevenness in the rotation of the magnetic disk can be minimized. The increased rigidity of the inventive box-like jacket has great advantages over the conventional bag-like jackets that the jacket can be inserted into the disk pit of a cumputer without distortion and the protection of the magnetic disk enveloped therein can be more complete.

The two covering sheet members 11 and 12 are integrally bonded together as engaged at the peripheral riser walls 11a and 12a so that, even in the case where this bonding is performed by welding, the stress in the covering sheet members 11 and 12 caused by the localized heating in welding is less significant than in the conventional bag-like jackets because the thermal stress in this case is limited to the riser walls 11a and 12a, i.e. the side walls of the box-like jacket, and the bodies of the covering sheet members 11 and 12 are free from the thermal stress while the welding in the conventional bag-like jacket is performed on the plane of the body. This condition of reduced thermal stress is also advantageous to ensure high dimensional accuracy of the jacket.

In the following, description is given of the liner sheets 13 and 14 which can be provided in several modifications in connection with separate shaping of the bodies of the covering sheet members 11 and 12.

The most conventional manner in which the liner sheets 13 and 14 are provided is that they are bonded by spot-wise or line-wise welding on to the inside surface of the respective covering sheet members 11 and 12 as in the conventional bag-like jackets. In place of the liner sheets made of a non-woven fabric, it is optional that the liner layers are formed by flock-finishing.

When a liner sheet made of a non-woven fabric of thermoplastic synthetic fibers is integrated with the covering sheet member by spot-wise or line-wise welding, the non-woven fabric is cut in advance in a desired size and form, e.g. circular form, and the thus cut non-woven fabric sheet is placed on the inside surface of the covering sheet member 11 or 12 utilizing the riser walls 11a or 12a as a positioning aid followed by welding. The riser walls 11a and 12a greatly facilitate exact positioning of the liner sheet 13 and 14 on the inside surface of the covering sheet member 11, 12 contributing to the improvement of the working efficiency.

When a flock-finished layer is provided on the inside surface of the covering sheet member 11 or 12 to serve as a liner layer, areas of desired pattern on the inside surface of the covering sheet members 11 and 12 are coated with an adhesive and flocking is performed on these areas by a conventional electrostatic flocking method. This flocking may be performed either before or after the punching works of the openings. Flock-finished liner layers are advantageous in comparison with the non-woven fabric-made liner sheets in respect of the decreased frictional resistance to the rotating magnetic disk since the magnetic disk is held in contact with the tips of the flocks as well as in respect of the decreased warping of the covering sheet members even in a highly humid atmosphere as is a problem in the conventional jackets provided with a liner sheet made of a non-woven fabric.

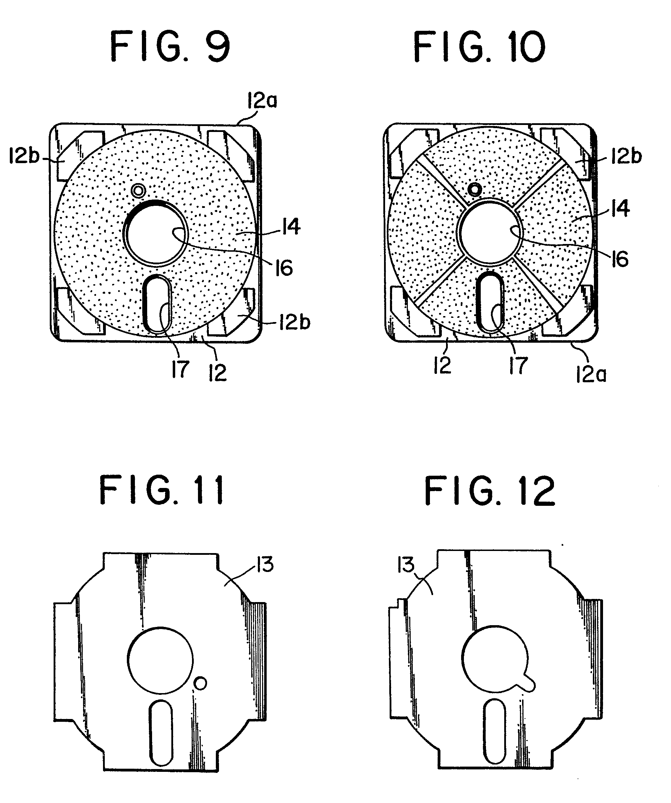

FIGURES 9 and 10 each illustrate a pattern of the flocked areas 14 (or 13) provided on the inside surface of a covering sheet member 12 (or 11). As is shown in these figures, it is preferable that the flocked areas are provided leaving small unflocked open areas around each of the openings 16, 17 and 17' in order to prevent the flocks from going out of the openings. The pattern of the flocked areas having radial unflocked areas shown in FIGURE 10 is further advantageous since such open areas serve as a means to collect the fallen-off flocks and the magnetic powder fallen off from the magnetic disk.

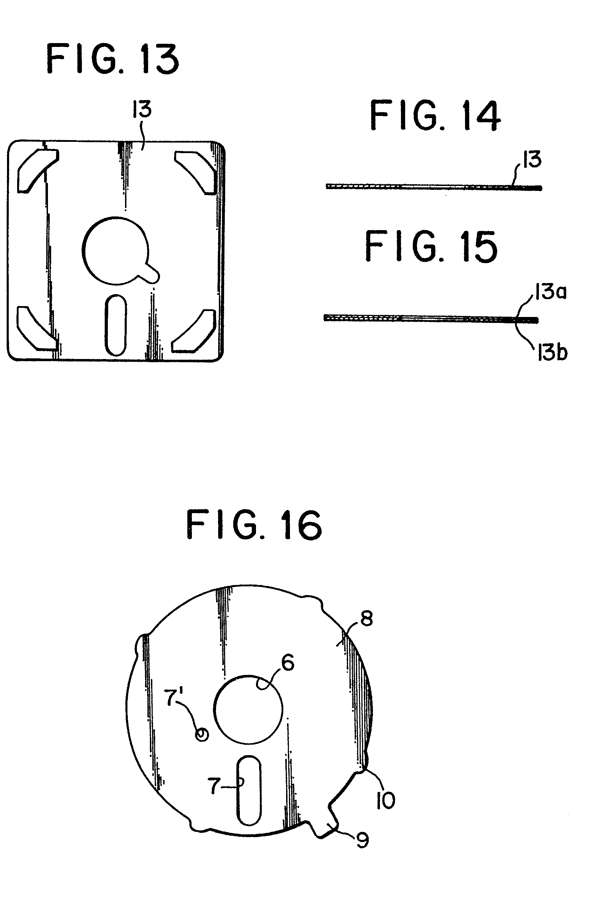

Although FIGURES 5 to 8 indicate that the liner sheets 13 and 14 are integrally bonded to the inside surfaces of the covering sheet members 11 and 12, respectively, it is a possible and advantageous way to provide the liner sheet 13 or 14 as a separate sheet not integrally bonded to the covering sheet member 11 or 12 but free therefrom. In this case, the liner sheet 13, 14 should be made of a non-woven fabric with larger rigidity than in the integrally bonded liner sheet or should be made of a suitable backup sheet of a plastic resin with some rigidity provided with a non-woven fabric sheet bonded thereto by welding or by using an adhesive or provided with a flocked layer. FIGURE 14 is a cross sectional view of such a liner sheet made of an integral non-woven fabric sheet with larger rigidity alone and FIGURE 15 is a cross sectional view of a liner sheet which is a composite of a backup sheet 13b and a liner layer 13a made of a non-woven fabric or formed by flocking. It is optional or, rather, preferable that the liner sheet is provided further with a cushioning layer on the backside of the liner layer made of, for example, a foamed rubber, e.g. silicone rubber. Such a cushioning layer serves to absorb any inaccuracy in the dimensions of the covering sheet members and the liner sheets and also to impart adequate resiliency to the magnetic disk held between the liner sheets. FIGURES 11 to 13 show several examples of the forms of the separate-type liner sheet 13. In any case, the liner sheet 13 or 14 should be contacted with the riser walls 11a or 12a of the covering sheet member 11 or 12 and the side surfaces of the inwardly raised corner projections 11b or 12b at certain lengths along the peripheries to facilitate exact positioning on the inside surface of the covering sheet member 11 or 12 and also should not extend over the inwardly raised corner projections 11b or 12b at the corner areas. Needless to say, the liner sheets 13 and 14 must be provided each with openings at positions corresponding to the circular center opening 16 and other openings in the covering sheet members 11 and 12.

The use of the above described separate-type liner sheets 13 and 14 in the inventive jacket is advantageous in the manufacturing process of the jacket and in the dimensional stability of the covering sheet members 11 and 12 in respect of the increased flatness of the jacket throughout the life of the jacketed magnetic disk memory. When a liner sheet made of a non-woven fabric is integrally bonded to the inside surface of the covering sheet member by spot-wise or line-wise welding, the welded portions are more or less not free from thermal stress or distortion resulting in decreased flatness of the jacket surface. Further, changes in the environmental conditions such as temperature and humidity during use of the jacketed magnetic disk memory differently influence the integrally bonded covering sheet members and liner sheets made of differnt materials to cause warping or bending of the jacket so that smooth and stable rotation of the magnetic disk is necessarily disturbed. These problems can be completely eliminated by the use of the separate-type liner sheets. Further, fabrication of a jacketed magnetic disk memory is greatly simplified by the use of the separate-type liner sheets in comparison with the integrally bonded liner sheets. For example, a magnetic disk 15 is first sandwiched with two liner sheets 13, 14 and the thus stacked disk and liner sheets are put together between two covering sheet members 11 and 12 followed by bonding of the latter along the engaged riser walls 11a and 12a or at the flat tops of the corner projections 11b and/or 12b by welding or by use of an adhe-sive to complete a jacketed magnetic disk memory very easily and rapidly.

The use of the separate-type liner sheets as described above gives a possibility of solving aother difficult problem in the floppy disk-type jacketed magnetic disk memory. As is described above, the jacket for the magnetic disk memory has a circular center opening, an oblong side opening for the magnetic head and an index window. While the center opening is merely for the driving of the disk, the oblong side opening is for the magnetic recording and readout and the reacording area of the magnetic disk is always exposed bare in this oblong side opening so that the magnetic disk is not protected by the jacket on the portion appearing in this opening. For example, dusts are readily taken up through this opening to make ingress between the magnetic disk and the liner sheet during its storage and use. Further, the magnetic disk is unavoidably subject to the danger of inadvertent stain or damage by being contacted with the finger tip of the operator or other stained or pointed bodies on the portion appearing in the opening in the course of its handling into and out of a storage box or during use. An improved jacket for magnetic disk memory has been proposed in this regard, for example, in Japanese Utility Model Kokai 54-46519, according to which the covering sheet member is provided with a bendable or foldable cover piece on the outer surface near the opening so that the opening is covered when not in use and uncovered when in use. Although effective seemingly, such a jacket with cover piece for the opening is not widely used in practice because of the more complicated process for the fabrication thereof and the troublesomeness in the actual use thereof requiring frequent covering and uncovering of the opening with the cover piece. This difficult problem can be solved by the use of a separate-type liner sheet as described below.

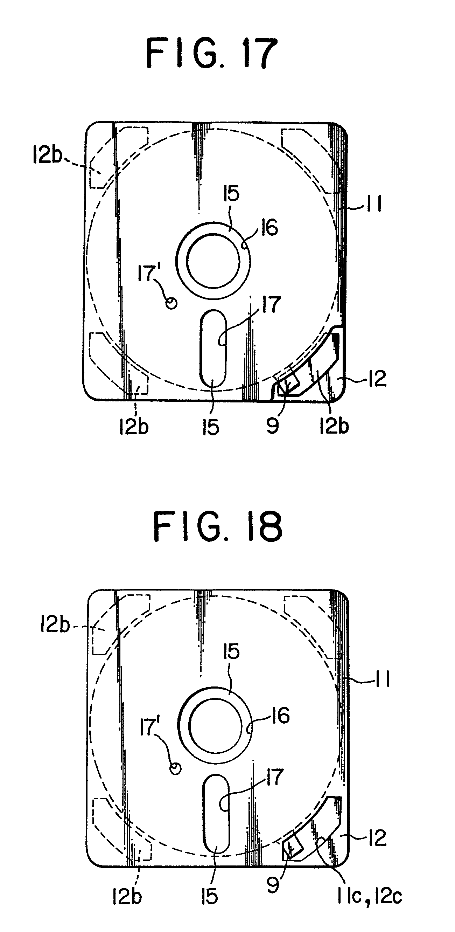

In this improved model of the jacket, the separate-type liner sheet 8 shown in FIGURE 16 has a circular form as a whole provided with the circular center opening 6, an oblong side opening 7 and an index window 7' and also with a protrusion 9 protruded in the radial direction at the periphery. FIGURE 17 is a plan view of a jacketed magnetic disk memory formed by mounting a liner sheet 8 shown in FIGURE 16 inside the jacket body composed of the covering sheet members 11 and 12 in a thin box-like form. In the same manner as described before, the covering sheet members 11 and 12 are engaged with each other at the riser walls 11a and 12a around their peripheries with the aid of the inwardly raised corner projections 12b on the covering sheet member 12 as a spacer means. In this case, however, the upper covering sheet member 11 is not in a complete square form but the lower right corner portion in FIGURE 17 has been cut off so that the protrusion 9 of the liner sheet 8 is protruded at this portion on one of the corner projections 12b. Alternatively, it is possible, instead of cutting off the corner portion of the covering sheet member 11, that an archwise slot is provided in this portion of the upper covering sheet member 11 through which the protrusion 9 of the liner sheet 8 is protruded.

FIGURE 18 is a plan view of another jacketed magnetic disk memory of the invention in which the liner sheet is provided with a peripheral protrusion 9. In this model, each of the covering sheet members 11 and 12 has no corner projection 11b or 12b at the lower right corner in FIGURE 18 as in the model illustrated in FIGURE 17 but an opening 11c, 12c is provided on the area corresponding to the corner projection 11b or 12b so that the peripheral projection 9 of the liner sheet appears in this opening 11c, 12c.

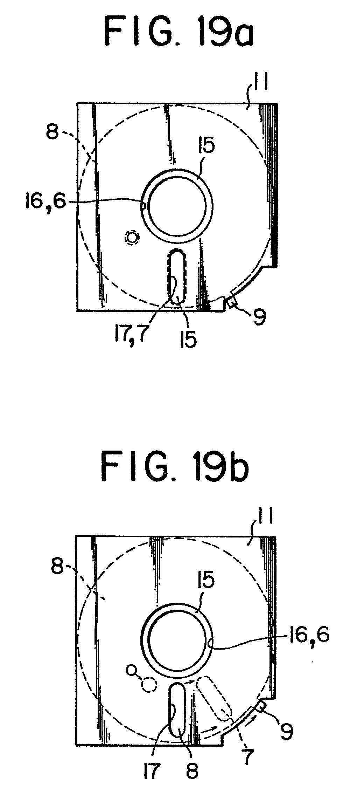

At any rate, the liner sheet 8 can be manually or mechanically rotated by the aid of the protrusion 9 appearing out of the covering sheet members 11, 12 within a certain angular span as is shown in FIGURES 19a and 19b. When the liner sheet 8 is at the position shown in FIGURE 19a, the oblong side opening 7 in the liner sheet 8 is at the position just in coincidence with the oblong side opening 17 provided in the covering sheet member 11 so that the magnetic disk 15 below the liner sheet 8 is exposed in this open area formed by the oblong openings 7 and 17 in the liner sheet 8 and the covering sheet member 11, respectively, to be in use for the magnetic recording and readout. When the liner sheet 8 is rotated counterclockwise by some angular span manually or mechanically as is shown in FIGURE 19b, the oblong opening 7 in the liner sheet 8 naturally comes off the position of the oblong side opening 17 in the covering sheet member 11 so that the magnetic disk 15 is covered on the area within this opening 17. In other words, the rotatable liner sheet 8 provides a shutter means for the opening 17 to cover and uncover the magnetic disk 15 according to need. Meanwhile, the liner sheet 8 illustrated in FIGURE 16 has several stretchouts 10 along the periphery which serve as a limiter means to limit the range of the manual or mechanical revolution of the sheet 8 when they come to hit against the side walls of the inwardly raised corner projections 12b.

Although the liner sheet 8 illustrated in FIGURE 16 is provided with only one protrusion 9, it is of course optional that a liner sheet is provided with two or more of the protrusions along the outer periphery thereof, if desired.

WHAT IS CLAIMED IS:

1.    A jacket for floppy disk-type jacketed magnetic disk memory which comprises:

(a) a pair of substantially rectangular covering sheet members made of a thermoplastic synthetic resin each having the peripheries bent approximately at right angle to form riser walls interengageable with the riser walls of the other covering sheet member when the covering sheet members are put together to form a thin box-like form, each covering sheet member being provided with a circular center opening to insert the driving shaft for rotating the magnetic disk and an oblong side opening for magnetic recording and readout with a magnetic head, at least either one of said covering sheet members being provided with at least one stepwise projection raised at the area near to one of the corners in the same direction as the riser walls, the side wall of the corner projection facing the center opening serving to define the space for the rotation of the magnetic disk, and the covering sheet members being engaged each with the other at the respective riser walls to be in a thin box-like form having a thickness defined by the said raised corner projection as a spacer means; and

(b) a pair of liner sheets each having a liner layer and enveloped between the covering sheet members engaged in the thin box-like form with the liner layer facing inwardly to make a space for the magnetic disk between the liner layers, each liner sheet being provided with a circular center opening and an oblong side opening for magnetic recording and readout in conformity with the circular center openings and the oblong side openings in the covering sheet members, respectively.

2. The jacket as claimed in claim 1 wherein each of the liner sheets is integrally bonded to the respective covering sheet member.

3. The jacket as claimed in claim 1 wherein each of the liner sheets is not integrally bonded to the respective covering sheet member but held at a fixed position by extending to the inside surface of the riser walls or the side walls of the raised corner projections.

4. The jacket as claimed in claim 1 wherein the liner sheet is made of a sheet of a non-woven fabric with rigidity.

5. The jacket as claimed in claim 1 wherein the liner sheet is made of a sheet of a non-woven fabric integrally bonded to a backup sheet with rigidity.

6. The jacket as claimed in claim 1 wherein the liner layer of the liner sheet is formed by flock-finishing on a backup sheet.

7.    The jacket as claimed in claim 1 wherein the liner sheet has a circular form as a whole with a diameter to be in contact with the inward walls of the raised corner projections and is provided with a protrusion extending in the radial direction on the periphery in such a manner that the protrusion is protruded out of the covering sheet member and the liner sheet is rotatable by pushing the protrusion around the center axis whereby the oblong side opening in the liner sheet comes off the oblong side opening in the covering sheet member to provide a shutter means therefor.

0097793

FIG. 1

FIG. 2

FIG. 3

FIG. 4

# FIG. 5

# FIG. 6

# FIG. 7

# FIG. 8

FIG. 9

FIG. 10

FIG. 11

FIG. 12

# FIG. 13

# FIG. 14

13

# FIG. 15

13a

13b

# FIG. 16

8

6

7'

7

10

9

# FIG. 17

# FIG. 18

0097793

FIG. 19a

FIG. 19b